## Europäisches Patentamt
## European Patent Office
## Office européen des brevets

(11) Numéro de publication: **0 183 631**
**B1**

(19)

(12) **FASCICULE DE BREVET EUROPÉEN**

(45) Date de publication du fascicule du brevet:
**02.08.89**

(21) Numéro de dépôt: **85440062.9**

(22) Date de dépôt: **23.10.85**

(51) Int. Cl.⁴: **H 05 B 7/06,** H 05 B 3/03

(54) Electrode de paroi pour four métallurgique électrique à courant continu.

(30) Priorité: **06.11.84 FR 8417323**

(43) Date de publication de la demande:
**04.06.86 Bulletin 86/23**

(45) Mention de la délivrance du brevet:
**02.08.89 Bulletin 89/31**

(84) Etats contractants désignés:
**AT BE CH DE GB IT LI LU NL SE**

(56) Documents cité:
**FR-A-1 538 996**
**FR-A-1 565 468**
**FR-A-2 292 397**
**US-A-2 877 282**
**US-A-3 867 562**
**US-A-4 287 380**

(73) Titulaire: **INSTITUT DE RECHERCHES DE LA SIDERURGIE FRANCAISE (IRSID), Voie Romaine B.P. 64, F-57210 Maizières- lès- Metz (FR)**

(72) Inventeur: **Michelet, Jacques, 19, rue du Fort, F-57050 Longeville- lès- Metz (FR)**
Inventeur: **Maurer, Ghislain, 2, rue des Anémones, F-57070 Metz (FR)**

(74) Mandataire: **Ventavoli, Roger, INSTITUT DE RECHERCHES DE LA SIDERURGIE FRANCAISE (IRSID) Station d'Essais Boîte Postale 64, F-57210 Maizières- lès- Metz (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 183 631 B1

## Description

La présente invention concerne une électrode de paroi pour four métallurgique électrique à courant continu destiné à l'élaboration des métaux à l'état liquide, notamment de l'acier.

Les électrodes de ce type sont des dispositifs de connexion électrique implantés au travers de la paroi du four (généralement au travers du fond) de manière à venir par une extrémité au contact de la masse métallique en fusion contenue dans le four, l'autre extrémité étant reliée à une borne d'une alimentation électrique de tension continue.

L'autre borne de l'alimentation électrique est classiquement reliée à une ou plusieurs électrodes mobiles en graphite placées à faible distance au-dessus du bain métallique afin de créer et entretenir entre elles et la surface du bain des arcs électriques qui apportent l'énergie thermique nécessaire à l'élaboration du métal.

Les électrodes de paroi considérées ici peuvent être mises en oeuvre en sidérurgie, notamment dans les poches de traitement ou de maintien en température (électrodes de fond de poche, ou plus généralement dans les fours de fusion à arcs (électrode de sole).

On sait que l'un des problèmes essentiels rencontrés dans ce domaine concerne la bonne tenue dans le temps de l'électrode de sole.

Celle-ci est soumise en effet à des conditions thermiques très sévères dues à la fois à la présence du métal en fusion dans le four dont la température peut atteindre, voire dépasser, 1800°C, et à un échauffement interne par effet joule en raison des intensités très fortes du courant électrique qui la traverse et qui, par exemple, dans les fours à arc de fusion, sont de l'ordre de 30 000 Ampères.

Une solution, récemment présentée par le demandeur dans la demande de brevet français n° 2 566 984 du 27.06.84 correspondant EP-A-169 100, appartenant à l'état de la technique selon Article 54 (3), consiste à réaliser une électrode de sole pour four à arcs à partir d'une barre pleine en acier dépassant du four par une portion terminale enveloppée dans un manchon en cuivre énergiquement refroidi par une circulation d'eau et relié à une borne de l'alimentation électrique. L'application du manchon sur le pourtour de la barre assure les contacts thermiques et électriques recherchés. En variante, un embout en matériau réfractaire prolonge la portion extérieure de la barre et coopère avec l'extrémité du manchon pour éliminer tout risque de fuite du métal en fusion au cas où, suite à un éventuel dérèglement du refroidissement, la fusion en forme de cône de la zone centrale de la barre se poursuivait jusqu'à l'extrémité de celle-ci.

Cette électrode donne pleinement satisfaction sur des périodes de fonctionnement du four de moyennes et longues durées. Toutefois, sur des périodes de très longue durée, on peut craindre que, au fil des séquences répétitives de refusion et de resolidification de la barre, les effets de dilatation différentielle entre le manchon refroidi et la barre alternativement chaude et froide conduisent progressivement à une dégradation de la qualité du contact électrique manchon-barre, et même de l'échange thermique entre eux-deux.

Le but de la présente invention est de proposer une nouvelle réalisation de ce type d'électrode qui pallie les inconvénients précités.

A cet effet, l'invention a pour objet une électrode de paroi pour four métallurgique électrique à courant continu, du type comprenant une barre métallique pleine destinée à traverser la paroi du four de manière à venir par une extrémité au contact d'une masse métallurgique en fusion contenue dans le four, l'autre extrémité dépassant à l'extérieur du four par une portion terminale enveloppée dans un manchon en matériau thermo et électroconducteur, par exemple en cuivre, énergiquement refroidi par une circulation de fluide refroidissant, notamment d'eau, et un embout en matériau bon conducteur de l'électricité, avec des moyens prévus pour relier cet embout à une borne de l'alimentation électrique, électrode caractérisée en ce que:

- le manchon entoure à distance la portion de la barre qui dépasse hors du four de manière à ménager entre eux, lors du montage, un espace de séparation.

Conformément à une réalisation préférée, l'embout est également en matériau bon conducteur de la chaleur, par exemple en cuivre, comme le manchon, et est refroidi énergiquement par une circulation de fluide refroidissant, notamment de l'eau.

Ainsi, on est sûr que l'embout est inusable, car il ne pourra jamais être mis au contact du métal en fusion, même en cas de fusion prononcée de la barre, suite à une défaillance éventuelle du refroidissement du manchon.

Conformément à une autre réalisation avantageuse, la barre et l'embout qui lui est solidaire sont montés coulissant longitudinalement dans le manchon, une butée d'arrêt fixée au four étant prévue à la base de l'embout pour éviter la sortie de la barre hors du manchon, éventuellement sous l'effet de son propre poids lorsque l'électrode est placée verticalement au travers du fond du four.

Cette variante préférée tient compte des phénomènes de retraction longitudinale de la barre lors de ses resolidifications périodiques qui peuvent avoir lieu, sans provoquer des contraintes mécaniques répétitives dans les différents éléments assemblés constitutifs de l'électrode.

Dans cette forme de réalisation, un contact électrique glissant est avantageusement réalisé entre l'embout et une partie fixe de l'électrode reliée à la borne de l'alimentation électrique. Cette partie fixe peut d'ailleurs être formée par la partie inférieure du manchon lui-même qui dépasse de l'extrémité de la barre, ou par une pièce autonome, par exemple une plaque de base fixée sous le manchon, donc assurant la liaison électrique recherchée avec ce dernier et présentant un orifice calibré pour le passage de l'embout, le contact électrique glissant s'opérant alors au niveau de cet orifice.

Comme on l'aura compris, l'idée à la base de l'invention consiste à disjoindre par construction la barre du manchon qui l'entoure, moyennant quoi, l'embout à l'extrémité de la barre, prévu initialement pour des raisons de sécurité, est réalisé en matériau bon conducteur de l'électricité pour assurer un contact électrique avec la barre à l'extrémité de celle-ci. Ce qui précède décrit la situation "à froid", c'est-à-dire lorsque l'électrode est hors d'utilisation, soit avant le premier démarrage du four sur électrode neuve, soit dans les périodes d'arrêt de fonctionnement du four entre les périodes de fusions successives.

Par contre, "à chaud", lorsque le four est mis sous tension, une phase de démarrage a lieu au cours de laquelle la barre s'échauffe jusqu'à la fusion totale de sa partie supérieure non refroidie enfouie dans le réfractaire de la paroi du four. Dans le même moment, l'espace ménagé à froid entre le manchon et la barre se comble rapidement de métal en provenance de la barre, soit par dilatation radiale de celle-ci lors de sa montée en température, soit par écoulement du métal fondu à la partie supérieure, soit selon ces deux processus, le mécanisme exact de remplissage de l'espace n'étant pas encore parfaitement élucidé.

Mais cela importe peu puisque le manchon étant énergiquement refroidi, il ne peut y avoir à son contact (et par conséquent dans l'espace de séparation existant "à froid") que du métal solide, soit d'origine, soit resolidifié.

Le contact manchon-barre est alors constitué. Dès lors, si le manchon est également connecté, le courant électrique ayant tendance à choisir le chemin qui lui est le moins résistif, passera préférentiellement par le manchon plutôt que par l'embout. Le passage du courant dans la barre s'opère alors latéralement, par le manchon.

Au terme de chaque fusion, l'opérateur ouvre le circuit électrique avant de vidanger le four, la barre se refroidit alors et par rétraction radiale, reconstitue l'espace de séparation avec le manchon dans l'attente du prochain démarrage pour une nouvelle fusion dans le four.

L'invention sera de toute façon bien comprise et, d'autres aspects et avantages ressortiront plus clairement au vu de la description qui suit, donnée à titre d'exemple non limitatif en référence à la planche de dessin annexée sur laquelle:

- la figure 1 représente, en coupe partielle longitudinale, la sole d'un four sidérurgique à arc à courant continu équipé d'une électrode selon l'invention;
- la figure 2 représente une vue en coupe transversale de l'embout prolongeant la borne de l'électrode, selon le plan A-A de la figure 1;
- la figure 3 illustre un mode de connexion électrique de l'embout par contact glissant différent de celui représenté sur la figure 1.

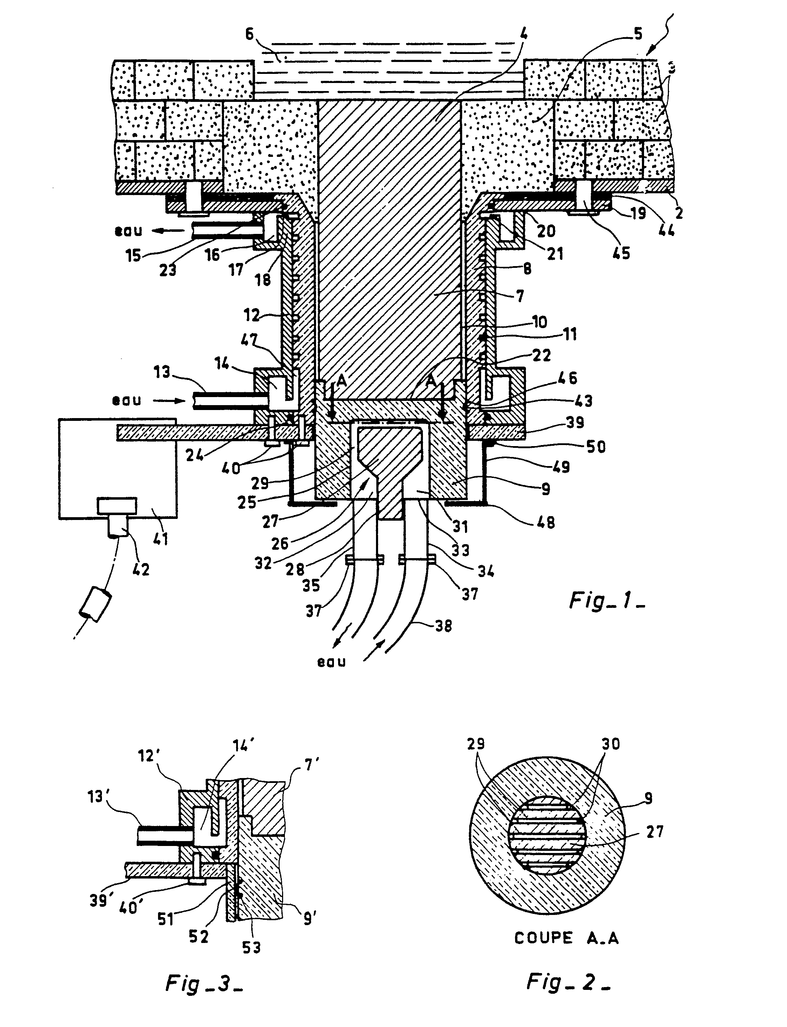

L'installation exemplifiée sur la figure 1 montre la partie centrale du fond 1 d'un four électrique à arc à courant continu qui est principalement formé d'une carapace métallique 2 revêtue intérieurement de briques 3 en matériau réfractaire. Un passage laissé libre est prévu au centre du fond du four afin d'y implanter une billette ronde en acier 4 de 250 mm de diamètre qui constitue, dans cet exemple, la barre métallique pleine de l'électrode de sole. L'espace laissé entre la partie supérieure de la billette 4 et les briques 3 est complété classiquement avec de la magnésie damée 5. L'extrémité supérieure de la billette 4 est donc en contact avec le métal en fusion 6 qui est ici de l'acier. De préférence, et tel que représenté sur la figure, une cuvette est ménagée au centre du fond 1 du four, afin de favoriser la formation du pied de bain juste au-dessus de l'extrémité supérieure de la billette 4.

A l'opposé, la billette 4 traverse la carapace 2 du four de manière à présenter une portion terminale 7 à l'extérieur du four.

Conformément à l'invention, la portion 7 de la billette est enveloppée latéralement par un manchon 8, et prolongée à son extrémité inférieure par un embout 9.

En outre, dans le présent exemple, la billette 4, qui est en acier, ainsi que le manchon 8 et l'embout 9 sont de section circulaire.

Le manchon 8, choisi en cuivre pour ses bonnes qualités de conducteur thermique et électrique, est monté autour à faible distance de la partie 7 de la billette, de manière à ménager entre eux un espace 10 qui sera comblé lors de la mise sous tension du four 1 lorsque la billette sera portée à des températures élevées lors de la fusion du bain métallique 6. Ainsi, dans cet exemple, un espace annulaire 10 d'une largeur de 1,25 mm est prévu autour de la billette 4 en acier dont le diamètre est de 250 mm, ce qui permet d'obtenir un contact étroit entre le manchon 8 et la billette 4 dès que cette dernière atteint 700 - 750°C environ.

A propos de la largeur de cet espace 10, il doit être compris qu'il n'y a pas, en toute rigueur, de valeur limite supérieure imposée, car le volume disponible sera de toute façon comblé lors de la première fusion de la barre 4.

Il existe par contre une valeur limite inférieure, déterminable dans chaque cas, en fonction de la nature et du diamètre de la barre 4, en tenant compte de l'expansion thermique radiale de la barre entre la température ambiante et la température à laquelle le métal constitutif de la barre 4 perd de sa rigidité et devient assez facilement déformable.

Si la largeur de l'espace 10 est trop faible, son remplissage par dilatation de la barre 4 sera atteint alors que celle-ci présente encore une bonne rigidité de sorte que l'on peut craindre des contraintes mécaniques sur le manchon préjudiciables au bon fonctionnement de l'électrode.

Comme indiqué ci-avant, dans le cas d'une barre ronde 4 en acier de 250 mm de diamètre, un espace 10 de 1,25 mm est prévu qui sera comblé par dilatation lors de la première mise en service, vers 700 - 750°C, c'est-à dire à une température ou l'acier est déjà déformable sous l'effet de sa propre poussée qu'il exerce sur le manchon en cuivre 8, (lequel présente une épaisseur avantageusement comprise entre 2 et 5 cm).

Le manchon 8 comporte, en outre, huit cannelures 11 usinées sur sa surface latérale externe, qui sont ici hélicoïdales et parallèles entre elles, chaque cannelure 11 effectuant globalement un tour du manchon 8.

Dans le but d'assurer la fermeture étanche des cannelures 11, une chemise 12, choisie en acier dans cet exemple, est appliquée sur le manchon 8.

Des moyens d'entrée et de sortie d'un fluide de refroidissement, qui est ici de l'eau déminéralisée, sont prévus sur la chemise métallique 12 afin d'alimenter les cannelures 11. Dans l'exemple présenté sur la figure 1, ces moyens sont constitués, à la partie inférieure de la chemise 12, par une conduite d'entrée 13 accédant à une chambre annulaire 14, et, à la partie supérieure de la chemise 12, par une conduite de sortie 15 issue d'une chambre annulaire 16. Par ailleurs, les cannelures 11 sont chacune reliées par leurs extrémités à ces deux chambres 14 et 15. Ainsi, leur extrémité inférieure débouche dans la chambre 14 et leur extrémité supérieure communique avec la chambre de sortie 16 par l'intermédiaire de passages horizontaux 17 arqués dans le sens du mouvement rotatif de l'eau dans les cannelures 11.

Comme on peut le voir sur la figure 1, les passages 17 sont ménagés sur la surface frontale d'une surépaisseur 18 de la chemise 12 à sa partie supérieure. La fermeture des passages 17 est obtenue par la venue de la chemise 12 contre une plaque de fond 19 (qui sera décrite par la suite), et un cordon de soudure 20 assure l'assemblage de ces deux pièces.

Afin de faciliter la communication des cannelures 11 avec les passages 17, une gorge annulaire 21 est avantageusement prévue à l'extrémité du manchon qui collecte l'eau sortant des cannelures 11.

Par ailleurs, la chambre annulaire 14 présente un distributeur annulaire 47, ayant sensiblement même profondeur que les cannelures 11, et étant ménagé sur la surface latérale du manchon 8. De la sorte, le fluide de refroidissement est avantageusement mis en accélération dans le distributeur 47 avant de pénétrer dans les cannelures 11.

L'étanchéité hydraulique de l'ensemble manchon-chemise est assuré par des joints toriques 23 et 24 disposés respectivement aux extrémités supérieure et inférieure du manchon 8.

L'embout 9 est choisi, comme le manchon, en cuivre en raison de ses bonnes qualités comme conducteur électrique et thermique.

L'embout 9 est fixé à l'extrémité inférieure de la billette 4, avantageusement par vissage. Comme on peut le voir sur la figure 1, l'extrémité inférieure de la billette présente un resserrement introduit dans un évidement 22 cylindrique correspondant ménagé à la surface de l'embout 9. Cette extrémité de la billette 4 ainsi que l'évidement 22 comportent, respectivement sur leur surface latérale externe et interne, un filetage (non représenté) permettant l'assemblage par vissage. De préférence, on choisit un filetage carré qui assure une surface de contact importante entre l'extrémité inférieure de la billette et l'embout, et, de ce fait, améliore le contact électrique entre eux.

Par ailleurs, l'embout 9 est évidé de manière à former une cavité 25 sensiblement cylindrique, ouverte à son extrémité inférieure, par laquelle s'effectue son refroidissement par circulation d'eau.

Pour ce faire, un noyau en acier 26 est logé dans la cavité 25. Ce noyau métallique présente la particularité d'être constitué de deux parties contiguës, une partie supérieure 27 cylindrique, de section sensiblement égale à celle de la cavité, et une partie inférieure 28 comprenant, sur sa surface cylindrique qui a même diamètre que la partie 27, deux méplats parallèles entre eux, bien visibles sur la figure 1. En outre, la partie 27 comporte, sur sa surface externe, latérale et frontale, des cannelures 29, parallèles entre elles, chacune d'elles ayant une forme générale en "U" autour de la partie 27.

En se reportant à la figure 2, on distingue mieux le parcours suivi par chaque cannelure 29. Sur la surface frontale de la partie 27, elles forment un réseau rectiligne et parallèle qui se poursuit de part et d'autre, sur la surface latérale de la partie 27, selon une direction verticale. Les encoches 30, représentées sur la figure 2, correspondent à la section de la partie verticale des cannelures 29.

Comme on peut le constater sur la figure 2, la fermeture des cannelures 29 est réalisée lors du montage du noyau 26 à l'intérieur de la cavité 25 par la simple venue en contact de cette pièce contre les parois de la cavité.

En se reportant à nouveau à la figure 1, on peut voir que les cannelures 29 débouchent à leurs extrémités dans deux chambres 31 et 32, disposées de part et d'autre de la partie 28 du noyau, et ménagées entre l'embout 9 et les méplats de la surface latérale de la partie 28.

La fermeture des chambres 31 et 32 est assurée au moyen d'une tôle 33, rapportée et soudée contre l'extrémité inférieure de l'embout 9, et comportant trois passages, l'un au centre, ayant même section que la partie 28 de manière à permettre le montage de la plaque 33 autour de cette partie, les deux autres étant circulaires et constituant chacun l'orifice des chambres 31 et 32 respectivement.

Deux conduites métalliques rigides 34 et 35 sont soudées contre la plaque 33 autour de ces deux orifices pour permettre respectivement l'entrée et la sortie de l'eau de refroidissement dans les chambres 31 et 32. En outre, ces deux conduites rigides sont prolongées par des durites souples 38, à l'aide des brides 37, ces durites étant elles-mêmes reliées à une alimentation en eau déminéralisée (non représentée sur cette figure).

De la sorte, une circulation de fluide refroidissant est établie dans les cannelures 29 permettant ainsi de refroidir efficacement la partie inférieure de la billette 4 par l'intermédiaire de l'embout 9.

En ce qui concerne la connexion électrique de la billette 4, cette connexion comprend une plaque 39 en cuivre comportant un orifice circulaire pour le libre passage de l'embout 9. La fixation de la plaque 39 contre l'extrémité inférieure du manchon 8 est assurée au moyen de vis 40.

La plaque 39 est reliée à une ou plusieurs ailettes verticales 41 également en cuivre qu'on dénomme généralement "drapeau". Chaque drapeau 41 est relié à un câble 42 en cuivre, ce dernier étant relié à une borne d'une alimentation électrique (non représentée sur les figures). En raison des intensités élevées véhiculées par les câbles 42, ces derniers sont de préférence creux pour y permettre une circulation d'un fluide réfrigérant, par exemple de l'eau.

Comme on le comprend, la pièce 39, qui est chargée d'établir la liaison électrique de la billette 4, est prévue en contact étroit avec le manchon 8 mais pas avec l'embout 9. En effet, il subsiste entre l'embout 9 et la pièce 39 un jeu fonctionnel pour que l'embout puisse facilement coulisser à l'intérieur du manchon.

Conformément à un mode de réalisation de l'invention représentée sur la figure 1, des moyens de contact électrique ont donc été prévus entre l'embout 9 et le manchon 8, ces moyens étant choisis pour leur aptitude à permettre le coulissement de l'embout dans le manchon. Ces moyens sont avantageusement constitués par une couronne 43 annulaire en cuivre, formée d'éléments du type "ressort à lame", les extrémités de ces éléments étant insérées dans deux rainures 46 prévues sur la surface interne du manchon 8. De ce fait, la partie souple de la couronne 43 est en contact élastique permanent avec l'embout 9.

Le dispositif selon l'invention comprend en outre des moyens d'assemblage de l'ensemble formé par le manchon 8 et la chemise 12, sous la carapace 2 du four et autour de la billette 4. Dans l'exemple décrit, ces moyens sont constitués tout d'abord par la plaque de fond 19 fixée à la carapace 2 du four par des vis 45 avec interposition d'une plaquette 44 isolante de l'électricité. Afin de parfaire l'isolation électrique de l'électrode selon l'invention à l'égard du four, les vis 45 sont logées, de manière classique, dans des canons isolants à collerette non représentés pour ne pas surcharger inutilement la figure 1.

Ainsi qu'il a été dit précédemment, on prévoit une butée fixe d'arrêt sous l'embout 9 pour empêcher la sortie éventuelle de la barre 4 hors du manchon 8.

Sur la figure 1, cette butée est constituée par un disque 48 présentant en son milieu un orifice pour son montage autour des conduites rigides 34 et 35 sous l'embout 9.

Le diamètre extérieur du disque 48 est prévu supérieur à celui de l'embout 9 afin de pouvoir disposer sur son pourtour des bras support 49 que l'on fixe à leur extrémité supérieure à la plaque 39 au moyen d'une bride boulonnée 50.

De préférence, pour des raisons de sécurité, la fixation des bras support à la plaque 39 est réalisée en utilisant une isolation électrique classique de la plaque 39. Pour les mêmes raisons, la face du disque en regard de l'embout 9 est revêtue d'une matière isolante de l'électricité.

Bien entendu, l'invention n'est nullement limitée au mode de réalisation décrit ci-dessus.

Il en est ainsi par exemple du refroidissement de l'extrémité de la barre 4 que l'on peut réaliser par circulation rapide du fluide de refroidissement entre le noyau 26 et l'embout 9, en prévoyant simplement un noyau 26 de dimension inférieure à celle de la cavité 25.

De même, en ce qui concerne la connexion électrique de l'embout 9, il existe différentes variantes de celle décrite précédemment.

Ainsi, on peut prévoir plusieurs lamelles annulaires disposées les unes au-dessous des autres sur le pourtour de l'embout et établissant le contact électrique entre le manchon et l'embout.

On peut également prévoir un contact électrique glissant entre l'embout 9 et une partie fixe de l'électrode, autre que le manchon 8, et qui serait reliée à une borne d'une alimentation électrique.

Une variante de ce type de réalisation est représentée sur la figure 3. La partie fixe de l'électrode est formée par une pièce annulaire 51 qui prolonge le manchon 8 à son extrémité inférieure et constitue ainsi une bague qui entoure latéralement la partie 9' de l'embout proéminente à l'extérieur du manchon 8. La bague 51 est rapporté par vissage sur la plaque 39' en cuivre.

Contrairement au mode de réalisation de la figure 1, des contacts électriques glissants 52, constitués par une couronne annulaire en cuivre formée d'éléments du type "ressort à lames", sont prévus en appui élastique contre la surface latérale interne de la bague 51.

Deux rainures 53 circulaires sont donc ménagées sur la surface latérale de l'embout, dans lesquelles sont logées les extrémités des éléments 52.

Bien entendu, on peut également prévoir les mêmes contacts électriques glissants mais en appui élastique contre la surface latérale de l'embout.

Enfin, si l'invention trouve une application préférentielle en tant qu'électrode de sole pour un four à arc à courant continu, elle est également destinée à d'autres utilisations dès lors qu'il est recherché une mise en contact entre une masse en fusion et une électrode, ou de façon plus générale, une barre métallique devant assurer le passage du courant électrique.

## Revendications

1. Electrode de paroi pour four métallurgique électrique à courant continu, du type comprenant une barre métallique destinée à traverser la paroi du four de manière à venir par une extrémité au contact d'une masse métallique en fusion contenue dans le four, l'autre extrémité dépassant à l'extérieur du four par une portion enveloppé dans un manchon en matériau thermo et électroconducteur, énergiquement refroidi par une circulation de fluide refroidissant, et en embout (9) en matériau bon conducteur de l'électricité, avec des moyens (43) prévus pour relier ledit embout à une borne de l'alimentation électrique, électrode caractérisée en ce que:
- le manchon (8) entoure à faible distance la portion dépassante (7) de la barre (4) de manière à ménager entre eux lors du montage un espace de séparation (10).

2. Electrode selon la revendication 1, caractérisée en ce que la barre (4) et l'embout (9) qui lui est solidaire, sont montés coulissant longitudinalement dans le manchon (8), et en ce que lesdits moyens pour relier l'embout (9) à l'alimentation électrique sont constitués par un contact électrique glissant (43).

3. Electrode selon la revendications 1, caractérisée en ce que l'embout (9) est également en matériau bon conducteur de la chaleur et en ce qu'il est refroidi énergiquement par une circulation interne de fluide refroidissant.

4. Electrode selon la revendication 1, caractérisée en ce que l'embout (9) est fixé par vissage à l'extrémité de la barre (4).

5. Electrode selon la revendication 4 caractérisée en ce que ledit vissage est assuré par des filetages rectangulaires.

6. Electrode selon la revendication 1, caractérisée en ce que une butée d'arrêt (48) est prévue à l'arrière de l'embout (9).

## Patentansprüche

1. Wandelektrode für einen gleichstrombetriebenen metallurgischen Elektroofen, mit einem Metallbarren zum Einsetzen in die Ofenwand, so dass er mit einem Ende mit der im Ofen enthaltenen metallischen Schmelzmasse in Kontakt kommt, wogegen das andere Ende aus dem Ofen mit einem von einer Manschette umhüllten Teil aus thermisch und elektrisch leitendem Material nach aussen ragt, die durch den Kreislauf eines Kühlfluides energisch gekühlt wird, und mit einem Ansatz (9) aus einem elektrisch gut leitendem Material, der über V-erbindungseinrichtungen (43) mit einer Klemme der Stromversorgung verbunden ist, welche Elektrode dadurch gekennzeichnet ist, dass die Manschette (8) mit geringem Abstande den vorstehenden Abschnitt (7) des Barrens (4) umgibt, so dass sich zwischen ihnen bei der Montage ein Trennspalt (10) ergibt.

2. Elektrode nach Anspruch 1, dadurch gekennzeichnet, dass der Barren (4) und der damit fest verbundene Ansatz (9) in Längsrichtung gleitend in die Manschette (8) eingesetzt sind, und dass die Verbindungs einrichtungen für den Ansatz (9) an die Stromversorgung von einem elektrischen Schleifkontakt (43) gebildet sind.

3. Elektrode nach Anspruch 1, dadurch gekennzeichnet, dass der Ansatz (9) ebenfalls aus gut wärmeleitendem Material besteht, und dass er durch einen inneren Kreislauf eines Kühlfluides energisch gekühlt ist.

4. Elektrode nach Anspruch 1, dadurch gekennzeichnet, dass der Ansatz (9) am Ende des Barrens (4) durch Verschraubung befestigt ist.

5. Elektrode nach Anspruch 4, dadurch gekennzeichnet, dass die Verschraubung mittels eines Rechteckgewindes gesichert ist.

6. Elektrode nach Anspruch 1, dadurch gekennzeichnet, dass ein Stopanschlag (48) am Hinterende des Ansatzes (9) vorgesehen ist.

## Claims

1. Wall electrode for a direct-current electric metallurgical furnace, of the type comprising a metal bar intended to pass through the wall of the furnace such that one end comes into contact with a molten metal mass contained in the furnace, the other end projecting outside the furnace in the form of a portion enclosed in a sleeve made of thermally and electrically conductive material, energetically cooled by a flow of cooling fluid, and an end piece (9) made of a material which is a good conductor of electricity, with means (43) provided to connect the said end piece to an electrical supply terminal, wall electrode characterized in that the sleeve (8) closely surrounds the projecting portion (7) of the bar (4) so that a separation space (10) is formed between them during assembly.

2. Wall electrode according to claim 1, characterized in that the bar (4) and the end piece (9) which is integral therewith are mounted so as to slide longitudinally inside the sleeve (8), and in that the said means for connecting the end piece (9) to the electrical supply consist of a sliding electrical contact (43).

3. Wall electrode according to claim 1, characterized in that the end piece (9) is also made of a material which is a good conductor of heat and in that it is cooled energetically by an internal flow of cooling fluid.

4. Wall electrode according to claim 1, characterized in that the end piece (9) is fixed by means of screwing to the end of the bar (4).

5. Wall electrode according to claim 4, characterized in that the said screwing is performed by means of rectangular threads.

6. Wall electrode according to claim 1, characterized in that a stop (48) is provided at the rear of the end piece (9).

*Fig_1_*

*Fig_3_*

COUPE A_A

*Fig_2_*